(19) Europäisches Patentamt / European Patent Office / Office européen des brevets

(11) **EP 4 641 522 A1**

(12) **EUROPEAN PATENT APPLICATION**

(43) Date of publication:
**29.10.2025 Bulletin 2025/44**

(21) Application number: **25172330.0**

(22) Date of filing: **24.04.2025**

(51) International Patent Classification (IPC):
**G06V 10/82** (2022.01)   **G06V 20/59** (2022.01)

(52) Cooperative Patent Classification (CPC):
**G06V 10/82; G06V 20/597**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.04.2024 GB 202405729**

(71) Applicants:
• **Continental Automotive Technologies GmbH
30175 Hannover (DE)**
• **Nanyang Technological University
Singapore 639798 (SG)**

(72) Inventors:
• **Wang, Ruoyu
639798 Singapore (SG)**
• **Lin, Dan
639798 Singapore (SG)**
• **Gao, Jianjun
639798 Singapore (SG)**
• **Yap, Kim Hui
639798 Singapore (SG)**

(74) Representative: **Aumovio Corporation
Continental Automotive
Technologies GmbH
Putzbrunner Straße 69
81739 München (DE)**

(54) **METHOD AND SYSTEM FOR ACTION RECOGNITION WITH MULTI-MODAL FUSION**

(57) The present disclosure relates to a computer-implemented method for action recognition, the method comprising: a) capturing a plurality of sequence of frames wherein each sequence is recorded using a predetermined modality; b) extracting intra-modality features and deriving a class token using N layers of multi-stream encoder; c) passing intra-modality features through K layers of cross-modality fusion decoder to extract inter-modality features and a query token; d) concatenating the class token with the query token to generate a global representation; and e) feeding the global representation to an action classification module trained to determine an action performed based on the global representation, and determining the action that was most probably performed. The present disclosure further relates to a control method for a vehicle, a system, a vehicle, a computer program, and a computer readable medium or data carrier signal.

FIG. 2

EP 4 641 522 A1

## Description

TECHNICAL FIELD

This disclosure is related generally to action recognition, and more specifically to a computer-implemented method for action recognition and a system capable of carrying out the method.

BACKGROUND

Driver Action Recognition (DAR) aims to utilise visual sensors in a car cabin to identify the actions of drivers automatically and plays a critical role in enhancing both human-vehicle communication and driving safety. In general, the DAR task leverages machine learning models with deep learning architectures that are able to capture global dependencies in various visual tasks.

However, most deep learning architectures mainly focus on extracting features from a single modality, which may not be sufficient for all action recognition applications. For example, in the DAR scenario, the lighting conditions within the cabin may be unstable and may be significantly affected by the environment and weather conditions. As a result, relying on input from single-modal sensors sensitive to light, such as visible light or RGB sensors, may constrain the performance of machine learning models. In addition, driver action recognition is more challenging than general action recognition scenarios due to the complex scenario inside the car cabin. In particular, the driver's body is partially obscured and the range of body movements during actions is relatively limited, thereby making the recognition task even more challenging.

In real-world scenarios, it is common for vehicle cabins to be equipped with cameras featuring different modalities (such as colour, IR, and depth) and views (such as front top, and right top). To this end, the driver action recognition task is inherently multi-modal, with each data modality potentially offering valuable information. Existing methods use different fusion strategies to leverage multi-modal input. In one example, an existing method uses average late fusion to combine depth and IR modalities from two different views for contrastive learning. In another example, another existing method concatenates the intra-modality features in temporal dimension to fuse the information of sensors from different views. In yet another example, channel-wise attention is used to re-weight the features from different modalities. The existing methods are decision-level and feature-level fusion strategies that focus on the simple combination or re-weight of multiple extracted single-modal features to represent the input multi-modal videos. As a result, the existing methods overlook the inter-relations between videos of different modalities, thereby resulting in a less comprehensive feature representation.

SUMMARY

It is an object of the present disclosure to provide a multi-modal sensor fusion model for action recognition. The presently disclosed model, also termed Multi-Fuser, is a multi-modal fusion transformer which incorporates a hierarchical architecture. The model employs layers of multi-stream encoder to extract intra-modal features of each modality. The model further employs layers of cross-modality fusion decoder to extract inter-modal features from the output of the last layers of the encoders. The inter-modal features will concatenate intra-modal features together as the final global representation of the multi-modal videos.

In some embodiments, the decoder may include a focal fusion block (FFB) to achieve effective and efficient multi-modal fusion. In some embodiments, the decoder may comprise a multi-modal consistent attention (MMCAtten) to perform cross-modality multi-head self-attention (MHSA). In particular, the MMCAtten may be spatiotemporal consistent in which attention is computed solely along the modality dimension, without considering the spatial and temporal dimensions, thereby reducing computational costs.

The object of the present disclosure is solved by the subject-matter of the independent claims, wherein further embodiments are incorporated into the dependent claims.

It shall be noted that all embodiments of the present disclosure concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

To solve the above technical problems, the present disclosure provides a computer-implemented method for action recognition of a person to be monitored, preferably an operator of a vehicle, the method comprising:

> a) capturing a plurality of sequence of frames with at least one imaging sensor, wherein each sequence is recorded using a predetermined modality, wherein at least some frame at least partially includes the person to be monitored;
> b) extracting intra-modality features and deriving a class token using N layers of multi-stream encoder, wherein the multi-stream encoder comprises a plurality of modality-specified sub-encoders;
> c) passing intra-modality features from the last K-th multi-stream encoder layer through K (K ≤ N) layers of cross-modality fusion decoder to extract inter-modality features and a query token;
> d) concatenating the class token from the multi-stream encoder with the query token from the cross-modality fusion decoder to generate a global representation of the plurality of sequence of frames; and

e) feeding the global representation to an action classification module that is trained to determine an action performed by the person to be monitored based on the global representation, and determining the action that was most probably performed by the person to be monitored.

The computer-implemented method of the present disclosure is advantageous over known methods as the method efficiently processes multi-modal input to better address the challenges of poor lighting and subtle motion variation in the driver action recognition (DAR) task, thereby potentially better recognising the action carried out. The method allows a combination of different input modalities in the action recognition process and performs action recognition with a common model for all modalities. The encoder-decoder based model extracts inherent intra-modality features from multi-modality videos more efficiently. Recognising that input videos, produced by distinct sensors, contain their own unique feature information, the multi-stream encoder processes each modality independently by employing distinct streams for each modality to extract their respective intra-modality features more efficiently. The cross-modality fusion decoder adeptly integrates multimodal interactions, thereby bolstering cross-modality representation by efficiently conducting the cross-modality dependency into global representation.

A preferred method of the present disclosure is a computer-implemented method as described above, wherein step b) comprises:

partitioning the plurality of sequence frames into discrete patches;
encoding the discrete patches as tokens, augmented by positioning encoders; and
passing the tokens through the multi-stream encoder to extract intra-modality features.

The above-described aspect of the present disclosure has the advantage that partitioning the frames into discrete patches allows the image patches to act as a form of quantization required for effective use of attention, while the positioning encoders allow the model to infer the order or position of the patches, thereby taking into account the neighbouring position embeddings that provide contextual information to each patch.

A preferred method of the present disclosure is a computer-implemented method of any of the preceding claims, wherein each modality-specified sub-encoder comprises a spatial multi-head self-attention (MHSA) block and a feed-forward network (FFN) residual block.

The above-described aspect of the present disclosure has the advantage that usage of spatial MHSA accelerates computation and reduces computational overhead as the self-attention mechanism is constrained to the spatial dimension which reduces the number of query-key comparisons.

A preferred method of the present disclosure is a computer-implemented method as described above or as described above as preferred, wherein the sub-encoders have non-shared parameters.

The above-described aspect of the present disclosure has the advantage that having non-shared parameters ensures that the encoders process the feature information of each modality, thereby ensuring that the unique feature information from each modality is potentially more efficiently processed and retained.

A preferred method of the present disclosure is a computer-implemented method of any of the preceding claims, wherein step c) comprises:

fusing the intra-modality features between each other across modality dimensions; and
traversing a zero-initialised query token through decoder layers of the cross-modality fusion decoder to capture inter-modality representation.

The above-described aspect of the present disclosure has the advantage that using a zero-initialised query token may lead to better training stability and final performance.

A preferred method of the present disclosure is a computer-implemented method as described above or as described above as preferred, wherein the cross-modality fusion decoder comprises a focal fusion block, a global multi-head cross-attention (MHCA) block, and a feed-forward network (FFN) residual block.

The above-described aspect of the present disclosure has the advantage that situating the focal fusion block within the decoder may potentially lead to more robust outcomes as it may maintain the structural integrity of the encoders, thereby potentially enhancing each modality's feature extraction capacity without interference from fusion processes.

A preferred method of the present disclosure is a computer-implemented method as described above or as described above as preferred, wherein the focal fusion block comprises a multi-modal consistent attention (MMCAtten) residual block, a feed-forward network (FFN) block, and a dynamic position embedding (DPE) block.

The above-described aspect of the present disclosure has the advantage that the focal fusion block is able to extract the interactive relationships between different modalities and the feature information represented by the fusion of multiple modalities by fusing the multi intra-modality features together to extract cross-modality features.

A preferred method of the present disclosure is a computer-implemented method as described above or as described above as preferred, wherein the MMCAtten residual block computes attention solely along a modality dimension.

The above-described aspect of the present disclosure has the advantage that computing attention solely along a modality dimension may diminish computational demands and may ensure that the attention mechanism zeroes in on pivotal interaction pairings.

The above-described advantageous aspects of a computer-implemented method of the disclosure also hold for all aspects of a below-described control method for a vehicle of the disclosure. All below-described advantageous aspects of a control method for a vehicle of the disclosure also hold for all aspects of an above-described computer-implemented method of the disclosure.

The present disclosure also relates to a control method for a vehicle, comprising carrying out the method according to the present disclosure, and:

f) generating a control signal for a vehicle based on the most probable action determined in step e), and controlling the vehicle in accordance with the control signal. After recognizing an action performed by the operator, the vehicle may be controlled to execute an action based on the action by the operator.

The above-described advantageous aspects of a computer-implemented method or control method for a vehicle of the disclosure also hold for all aspects of a below-described system of the disclosure. All below-described advantageous aspects of a system of the disclosure also hold for all aspects of an above-described computer-implemented method or control method for a vehicle of the disclosure.

The present disclosure also relates to a system comprising means for carrying out the method according to the present disclosure.

The above-described advantageous aspects of a computer-implemented method, control method for a vehicle, and system of the disclosure also hold for all aspects of a below-described vehicle of the disclosure. All below-described advantageous aspects of a vehicle of the disclosure also hold for all aspects of an above-described computer-implemented method, control method for a vehicle, and system of the disclosure.

The present disclosure also relates to a vehicle, preferably a ground or a land vehicle, comprising the system of the present disclosure, wherein the system is configured for monitoring an operator of the vehicle and/or for controlling the vehicle.

The above-described advantageous aspects of a computer-implemented method, control method for a vehicle, system, and vehicle of the disclosure also hold for all aspects of a below-described computer program of the disclosure. All below-described advantageous aspects of a computer program of the disclosure also hold for all aspects of an above-described computer-implemented method, control method for a vehicle, system, and vehicle of the disclosure.

The present disclosure also relates to a computer program comprising instructions to cause the system of the present disclosure or the vehicle of the present disclosure to carry out the method of the present disclosure.

The above-described advantageous aspects of a computer-implemented method, control method for a vehicle, system, vehicle, and computer program of the disclosure also hold for all aspects of a below-described computer readable medium or data carrier signal of the disclosure. All below-described advantageous aspects of a computer readable medium or data carrier signal of the disclosure also hold for all aspects of an above-described computer-implemented method, control method for a vehicle, system, vehicle, and computer program of the disclosure.

The present disclosure also relates to a computer readable medium or a data carrier signal comprising the computer program of the present disclosure. The computer readable medium may include any medium and/or mechanism for storing or transmitting information in a form readable by a machine (e.g., a computing device). The computer readable medium may be any medium, such as for example, read-only memory (ROM); random access memory (RAM); a universal serial bus (USB) stick; a compact disc (CD); a digital video disc (DVD); a data storage device; a hard disk; electrical, acoustical, optical, or other forms of propagated signals (e.g., digital signals, data carrier signal, carrier waves), or any other medium on which a program element as described above can be transmitted and/or stored.

A hierarchical architecture for driver action recognition is proposed that is based on a multi-modal fusion transformer, named MultiFuser. In some embodiments, MultiFuser first employs layers of multi-stream encoder to extract the intra-modal features of each modality. In some embodiments, MultiFuser comprises layers of cross-modality fusion decoder to extract inter-modal features from the output of the last layers of the encoders. In some embodiments, the inter-modal features may then be concatenated with intra-modal features to generate the global representations of the multi-modal video inputs. In the fusion decoder, a focal fusion block (FFB) is proposed to achieve effective and efficient multi-modal fusion. In some embodiments, a special multi-modal consistent attention (MMCAtten) is designed to perform cross-modality multi-head self-attention (MHSA). The MMCAtten may be spatiotemporal consistent in which attention is computed solely along the modality dimension, without considering the spatial and temporal dimensions. The consistent design may significantly reduce computational costs.

The ideas described herein are adapted to real-world applications where vehicle cabins are preferably equipped with cameras featuring different modalities. MultiFuser may help with driver safety monitoring in these applications. MultiFuser may also be used in the automotive industry for a smart cabin design to provide driver safety monitoring. It may also be used in other industries where human activity plays an important role, such as cockpit monitoring for trains and aircraft.

BRIEF DESCRIPTION OF THE DRAWINGS

These and other features, aspects, and advantages will become better understood with regard to the following description, appended claims, and accompanying drawings where:

Fig. 1 is a schematic illustration of vehicle, in accordance with embodiments of the present disclosure;

Fig. 2 is a schematic illustration of action recognition module, in accordance with embodiments of the present disclosure;

Fig. 3 is a schematic illustration of an example of a modality-specified sub-encoder with vision transformer (ViT) architecture, in accordance with embodiments of the present disclosure;

Fig. 4 is a schematic illustration of an example of a focal fusion block, in accordance with embodiments of the present disclosure; and

Figs. 5A and 5B illustrate some experimental results obtained using action recognition module, in accordance with embodiments of the present disclosure.

In the drawings, like parts are denoted by like reference numerals.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

DETAILED DESCRIPTION

In the summary above, in this description, in the claims below, and in the accompanying drawings, reference is made to particular features (including method steps) of the disclosure. It is to be understood that the disclosure in this specification includes all possible combinations of such particular features. For example, where a particular feature is disclosed in the context of a particular aspect or embodiment of the disclosure, or a particular claim, that feature can also be used, to the extent possible, in com-bination with and/or in the context of other particular aspects and embodiments of the disclosure, and in the disclosure generally.

In the present document, the word "exemplary" is used herein to mean "serving as an example, instance, or illustration." Any embodiment or implementation of the present subject matter described herein as "exemplary" is not necessarily be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the forms disclosed, but on the contrary, the disclosure is to cover all modifications, equivalents, and alternative falling within the scope of the disclosure.

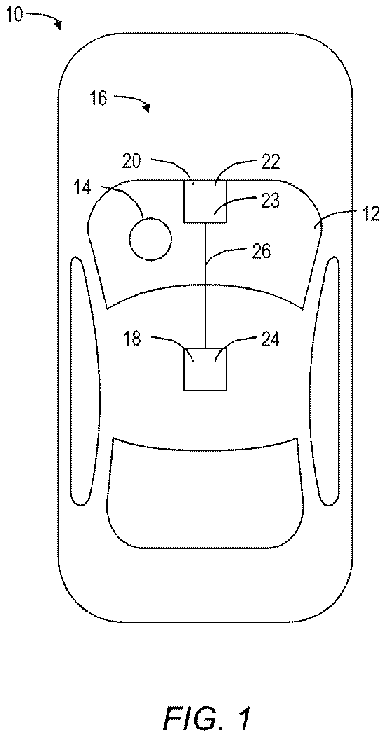

Fig. 1 is a schematic illustration of vehicle 10, in accordance with embodiments of the present disclosure. According to some embodiments, a vehicle 10 comprises a vehicle cabin 12. An operator 14 that controls the vehicle 10 is in the vehicle cabin 12. The operator 14 is an example of a person to be monitored. Another example of a person to be monitored is a passenger in the vehicle cabin 12. The vehicle 10 further comprises a system 16 for monitoring and controlling the vehicle 10.

In some embodiments, the system 16 may comprise a control apparatus 18 that is configured to generate control signals for controlling the vehicle 10 based on different inputs, such as foot pedals, control knobs or buttons, touch input devices or other human machine interfaces in general. The control apparatus 18 is further configured to generate control signals based on sensor inputs.

In some embodiments, the system 16 may comprise at least one sensor 20 that is arranged to output sensor data about the operator 14. Some sensors 20 may be imaging sensors 22 that output image data. Some imaging sensors 22 may be arranged to have different point of views on the operator 14. Some imaging sensors 22 may record image data in different colours or wavelengths. Some imaging sensors 22 may record image data in the optical spectrum and with the typical red, green, blue (RGB) colour scheme. Some imaging sensors 22 may record image data in the infrared (IR) spectrum. Some sensors 20 may be configured as depth sensors 23 that are configured to estimate distance data that are indicative of a distance of the operator 14 or their body parts from the depth sensor 23.

In some embodiments, the system 16, preferably the control apparatus 18, may comprise an action recognition module 24. The action recognition module 24 may be configured to receive sensor data from at least one sensor 20 that are associated with different modalities. As used herein, a modality is the classification of a single independent channel of input, e.g., the sensor data of the sensor 20, between the system 16 and the operator 14. Such channels may differ based on sensory nature (e.g., RGB, infrared, depth), or other significant differences in processing (e.g., image vs. non-image). The system 16 is configured as a multimodal system that preferably has overlapping modalities. Examples of modalities include a point of view on the person to be monitored, a colour channel, an infrared channel, and a depth channel.

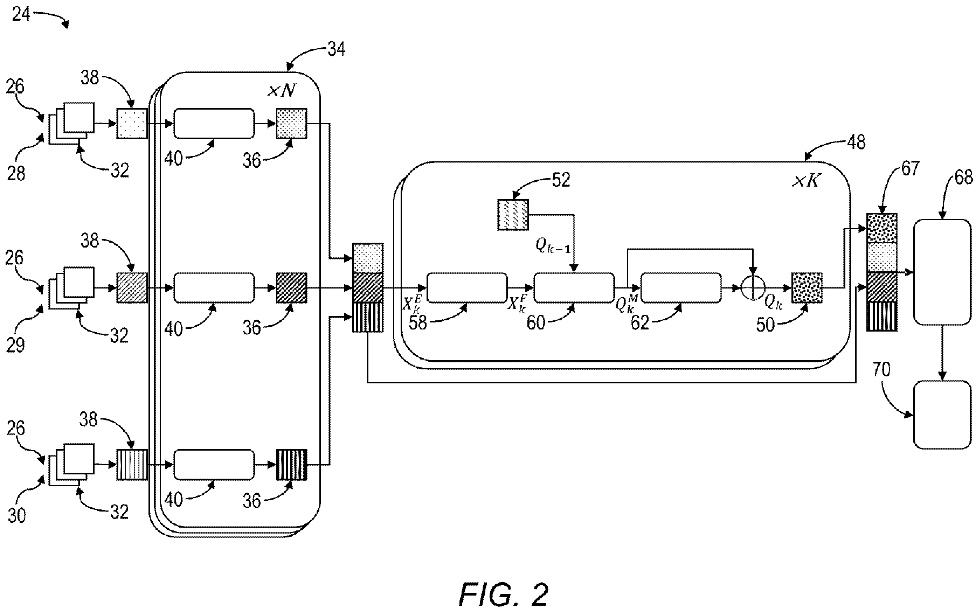

Fig. 2 is a schematic illustration of action recognition module 24, in accordance with embodiments of the present disclosure. According to some embodiments, the action recognition module 24 is configured to receive sensor data 26 obtained by the sensor 20. First sensor data 28 may be associated with a first modality, such as RGB image data. Second sensor data 29 may be associated with a second modality, such as IR image data, that is different from the first modality. Third sensor data 30 may be associated with a third modality, such as depth image data, that is different from the first and second modality. The first, second, and third sensor data 28, 29, 30 each include a sequence of frames 32 that form a video of the operator 14, and wherein at least some frame 32 at least partially includes the operator 14.

In some embodiments, the sensor data 26 may be fed into multi-stream encoder 34 to extract intra-modality features 36 and derive a class token. In some embodiments, there may be N layers of multi-stream encoder 34 for intra-modal feature extractions. In some embodiments, the sensor data 26 may be partitioned into discrete patches 38 and encoded as tokens augmented by position embeddings. The multi-stream encoder 34 may be designed to efficiently and extract distinct features inherent to each modality input, also referred to as intra-modality features. In some embodiments, the multi-stream encoder 34 may comprise multiple streams of modality-specified sub-encoders 40, wherein each modality-specified sub-encoder 40 is tailored for a specific modality input. When given inputs $X^{in} = \{X_1^{in}, X_2^{in}, ..., X_M^{in}\}$ from $M$ modalities, the outputs from the multi-stream encoder 34 $X^E = \{X_1^E, X_2^E, ..., X_M^E\}$ may be formulated based on the outputs from each corresponding stream:

$$X_m^E = \text{Stream}_m\left(X_m^{in}\right)$$

where m E {1,2, ... , M} denotes the $m$-th modality, and the $\text{Stream}_m$ is trained for modality m.

In some embodiments, the modality-specified sub-encoders 40 may have non-shared parameters. In some embodiments, the modality-specified sub-encoders 40 may have identical structure with non-shared parameters. The modality-specified sub-encoders 40 may have any architecture suitable for image recognition, such as convolutional neural networks (CNN). In some embodiments, the modality-specified sub-encoder 40 may be a vision transformer (ViT), which represents an input image as a series of image patches, and directly predicts class labels for the image. ViT is an architecture that uses self-attention mechanisms to process images, consisting of a series of transformer blocks. More information on the architecture and training of ViT may be found at least in "An image is worth 16x16 words: Transformers for image recognition at scale" by Dosovitskiy *et. al.*

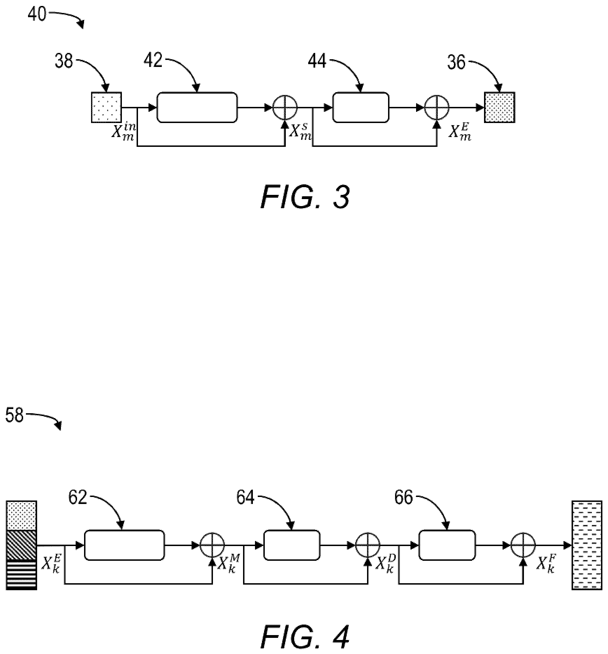

Fig. 3 is a schematic illustration of an example of a modality-specified sub-encoder 40 with vision transformer (ViT) architecture, in accordance with embodiments of the present disclosure. According to some embodiments modality-specified sub-encoder 40 may comprise a multi-head self-attention (MHSA) residual block 42 and a feed-forward neural network (FNN) block 44. The MHSA residual block 42 comprises a plurality of self-attention heads running in parallel and is used to capture contextual information in the input data. The self-attention mechanism allows the ViT model to attend to different regions of the input data based on their relevance to the task at hand. Examples of multi-head self-attention residual block include spatial MHSA which is constrained to the spatial dimension and joint MHSA which is constrained to the spatial-temporal dimension. Preferably, MHSA residual block 42 is spatial MHSA to accelerate computation. Spatial MHSA may be preferred over joint MHSA because, in comparison with joint MHSA, spatial MHSA reduces the number of query-key comparisons, which may lead to a significant reduction in the computational overhead. In particular, given the scene-related characteristics of action recognition, spatial MHSA may be sufficient to deliver a holistic video representation for classification while reducing the computational overhead. To this end, each token interacts attention-wise only with other tokens from the same frame of the same modality. Specifically, for a video clip $X = \{X_1, X_2, ... , X_T\}$ with $T$ frames, spatial MHSA may be viewed as a collection of $T$ intra-frame MHSAs:

$$\text{S\_MHSA}(X) = \text{Concat}\left(\text{MHSA}_t(X_t)\right),$$

where $X_t$ denotes the t-th frame, $t$ E {1,2, ..., T}. The process is uniformly applied to each modality input $m$ on stream $m$.

$$X_m^S = \text{S\_MHSA}_m\left(\text{Norm}(X_m^{in})\right) + X_m^{in},$$

$$X_m^E = \text{FFN}_m\left(\text{Norm}(X_m^S)\right) + X_m^S.$$

The frames first go through the MHSA residual block 42 to conduct global dependency. In some embodiments, the FFN residual block 44 may comprise two linear projections interspersed with a GeLU (Gaussian Error Linear Unit) activation to enhance each token on a pointwise basis. GeLU activation may be preferred over ReLU function due to its smoother and more continuous shape, which may potentially make it more effective at learning complex patterns in the data. In some embodiments, layer normalisation may be utilised before each block.

Referring to Fig. 2, intra-modality features 36 from the last $K$-th multi-stream encoder 34 layers may be passed through $K$ ($K \leq N$) layers of cross-modality fusion decoder 48 to extract inter-modality features 50 and a query token. In some embodiments, the intra-modality features 36 may be fused between each other across modality dimensions, with a zero-initialised query token 52 traversing through the decoder layers to capture inter-modality representation. The query token 52 may then be concatenated with the class token derived from the multi-stream encoder 34. The hierarchical intra- and inter-modality features are imported to an action classification module 68 that is trained for classification and predicts the action 70 taken by the operator, which may indicate the class of action that is most probable, i.e., the most probable action. In some embodiments, the most probable action can be processed by the control apparatus 18 to generate a control signal based on the most probable action. The control signal may initiate a warning or emergency braking measures or other vehicle steering operations depending on the most probable action.

In some embodiments, the cross-modality fusion decoder 48 may comprise a focal fusion block 58, a global multi-head cross-attention (MHCA) block 60, and a feed-forward network (FFN) residual block 62. In some embodiments, the focal fusion block 58 may be interspersed in the encoder chain (FFB in-chain) or may be positioned exclusively before the decoder (FFB off-chain). Preferably, the focal fusion block 58 is situated within the decoder to yield more robust outcomes, which may maintain the structural integrity of the encoders, thus enhancing each modality's feature extraction capacity without interference from fusion processes. In some embodiments, the focal fusion block 58 may first fuse the intra-modality features together and then extract cross-modality features. The query token 52 may then act as $Q$ to engage in multi-head cross-attention (MHCA) with the cross-modality features to decode global information of multi-modality videos.

Fig. 4 is a schematic illustration of an example of a focal fusion block 58, in accordance with embodiments of the present disclosure. In some embodiments, the focal fusion block 58 may comprise a multi-modal consistent attention (MMCAtten) residual block 62, a feed-forward network (FFN) block 64 mirroring the structure of encoder, and a dynamic position embedding (DPE) block 66.

In some embodiments, MMCAtten residual block 58 is used to extract interactive relationships between different modalities and the feature information represented by the fusion of multiple modalities. MMCAtten is spatiotemporal consistent in which attention is computed solely along the modality dimension, without considering the spatial and temporal dimensions, thereby potentially reducing computational costs. Similar to spatial MHSA, the dimension of attention interactions may be constrained such that only tokens from different modalities in the same temporal and spatial dimensions are allowed to compute query-key comparisons. For a patch token $X_{m,t,s}$ from modality $m$, frame $t$ and position $s$, it will only interact with the different modality tokens $X_{m',t,s}$ from frame $t$ and position $s$, where $m' \in \{1,2, ... , M\}$:

$$\text{MMCAtten}(X) = \text{Concat}\left(\text{MHSA}_{(t,s)}\left(X_{(t,s)}\right)\right),$$

where $t \in \{1,2, ... , T\}$, $s \in \{1,2, ..., L\}$ denotes the $t$-th frame of $T$ frames and the s-th patch of $L$ patches respectively. By constraining interaction dimensions, MMCAtten may not only diminishes computational demands but may also ensure the attention mechanism zeros in on pivotal interaction pairings. Thus, in the $k$-th decoder layer, the concatenated multi intra-modality features from the multi-stream encoder 34 are first processed by the MMCAtten residual block 62, then channelled through FFN block 64 mirroring the structure in the encoder.

$$X_k^M = \text{MMCAtten}\left(\text{Norm}(X_k^E)\right) + X_k^E,$$

$$X_k^D = \text{FFN}_m\left(\text{Norm}(X_k^M)\right) + X_k^M.$$

According to some embodiments, layer normalisation is adopted before each block. In some embodiments, the output $X_k^D$ undergoes dynamic position embedding through the dynamic position embedding (DPE) block 66 using depth-wise convolution with zero-padding to generate $X_k^F$ for further MHCA.

Referring to Fig. 2, zero-initialised query token 52 is adopted for stable training. The zero-initialised query token 52 ($Q_{k-1}$) learns the global representations from multi-modality features $X_k^D$ in MHCA.

$$Q_k^M = \text{MHCA}(Q_{k-1}, X_k^F, X_k^F),$$

$$Q_k = \text{FFN}\left(\text{Norm}(Q_k^M)\right) + Q_k^G$$

where MHCA means that the query generated from a linear transformation of $Q_{k-1}$ will interact attention-wise with all key-value pairs generated from the linear transformation of $X_k^F$. Another same FFN residual block 62 may be added before the final output $Q_k$ of the kth decoder.

Referring to Figs. 2 to 4, a method according to the present disclosure is described. The sensor 20, e.g., the imaging sensor 22 captures a video of the operator 14. The video is composed of a sequence of frames 32. Each frame 32 is associated with a certain time stamp Ti. A first modality includes those frames 32 that were captured with the imaging sensor 22 being an RGB sensor, a second modality includes those frames 32 that were captured with the imaging sensor 22 being an IR sensor, and a third modality includes those frames that were captured with the imaging sensor 22 being a depth sensor.

In Fig. 2, the first modality is illustrated as the top branch, the second modality is illustrated as the middle branch, and the third modality is illustrated as the bottom branch. The captured frames 32 are fed to $N$ layers of multi-stream encoder 34 for intra-modal features extraction and deriving a class token. In particular, the captured frames 32 of each modality are fed into separate modality-specified sub-encoders 40 within the multi-stream encoder 34 to extract inter-modality features. The frames 32 may be partitioned into discrete patches, with the patches encoded as tokens augmented by positioning encoders, before passing the tokens through the multi-stream encoder to extra intra-modality features.

The output from $K$th encoder layers may be fed into $K$ layers of cross-modality fusion decoder 48 for inter-modal feature extraction and deriving a query token. In particular, the intra-modality features may be fused between each other across modality dimensions, with a zero-initialised query token traversing through the decoder layers to capture inter-modality representation in multimodality videos. Ultimately, the query token, which encapsulates inter-modality information, is concatenated with the class token derived from the encoder, encapsulating intra-modality information, to jointly form the hierarchical global representation 67 of the multi-modal video. The global representation 67 is fed to an action classification module 68 that is trained for classification and predicts the action 70 taken by the operator 14 based on the global representation 67.

For example, if the operator 14 experiences indications of microsleep, the system 16 records the operator 14, recognizes the action to be micro sleep and will generate a control signal that will cause a warning to the operator 14 and may steer the vehicle 10 to a safe position at the side of the road/street.

The following describes an example of the implementation details of system of 16. In some embodiments, system 16 may be implemented using most experiment settings disclosed in "UniFormerV2: Spatiotemporal Learning by Arming Image ViTs with Video UniFormer" by Li *et. al.* (arXiv:2211.09552). For each video input, 8 frames may be sampled, with each frame resized to 224×224. The frames are then split into 8×16×16 patches for embedding. An example of a network architecture consists of $N = 12$ layers of encoder and the last $K = 4$ layers are paired with decoder. The outputs from the final decoder and encoder are concatenated and fed into a fully connected layer followed by a softmax layer for classification. In training, AdamW may be used as the optimizer with initial learning rate of $1 \times 10^{-4}$. System 16 may be pre-trained on the NTU RGB+D dataset for 50 epochs. The NTU RGB+D dataset is available at https://

rose1.ntu.edu.sg/dataset/actionRecognition/ and described in "NTU RGB+D: A Large Scale Dataset for 3D Human Activity Analysis" by Shahroudy *et. al.* (arXiv:1604.02808). System 16 may then be fine-tuned on a driver action recognition dataset. An example of a driver action recognition dataset is the Drive&Act dataset available at https://driveandact.com/ which is a large-scale (over 9.6 million frames) video dataset widely used in driver action recognition. The Drive&Act dataset encompasses eight types of multi-modal input data: RGB, IR, depth and NearInfraRed (NIR) from five different perspectives. It categorizes activities into three distinct levels: scenarios, fine-grained activities, and atomic action units. In one example, the system 16 was trained on RGB, IR, and depth taken from the right-top view into their respective fine-grained activities, although it is emphasized that any other modalities or views may also be used.

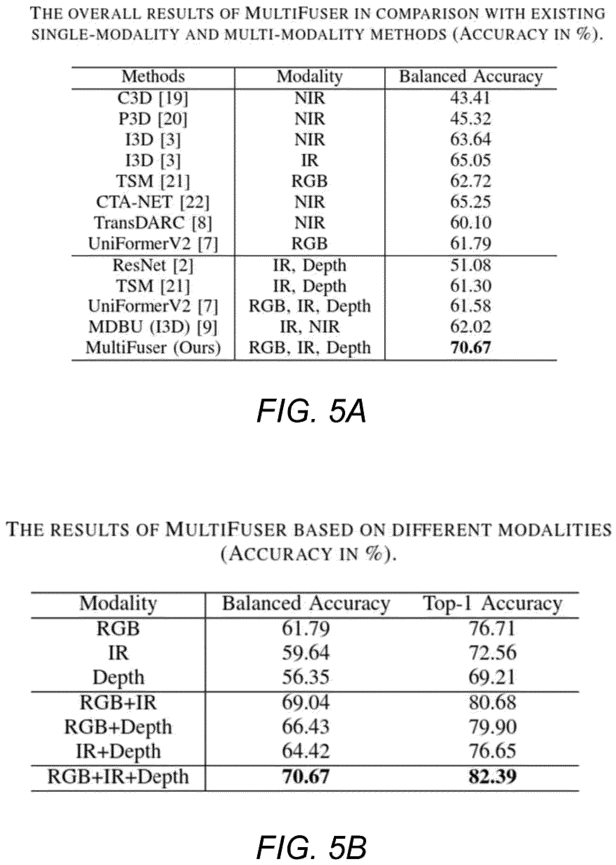

Figs. 5A and 5B illustrates some experimental results obtained using action recognition module 24, in accordance with embodiments of the present disclosure. Two metrics were used to evaluate the results: Balanced Accuracy (average per-class accuracy) as the primary metric, and Top-1 Accuracy. As illustrated in Fig. 5A, the action recognition module 24 (termed MultiFuser in the figure) achieved a high balanced accuracy of 70.62% which outperformed existing models on the Drive&Act dataset. It is noted that since the existing models are primarily single-modal, such models were supplemented using a late fusion strategy on RGB, IR, and depth modalities. As illustrated in Fig. 5B, an increase in input modalities can increase recognition accuracy of the action recognition module 24 (or MultiFuser). Consequently, when three modalities are input, the accuracy peaks, exhibiting a 10.34% (balanced accuracy) enhancement compared to the single-modality RGB.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present disclosure are intended to be illustrative, but not limiting, of the scope of the invention, which is set forth in the following claims.

**Claims**

1. A computer-implemented method for action recognition of a person to be monitored, preferably an operator (14) of a vehicle (10), the method comprising:

   a) capturing a plurality of sequence of frames (32) with at least one imaging sensor (22), wherein each sequence is recorded using a predetermined modality, wherein at least some frame (32) at least partially includes the person to be monitored;

b) extracting intra-modality features and deriving a class token using N layers of multi-stream encoder (34), wherein the multi-stream encoder comprises a plurality of modality-specified sub-encoders (40);

c) passing intra-modality features from the last K-th multi-stream encoder layer through $K$ ($K \leq N$) layers of cross-modality fusion decoder (48) to extract inter-modality features and a query token;

d) concatenating the class token from the multi-stream encoder with the query token from the cross-modality fusion decoder to generate a global representation of the plurality of sequence of frames; and

e) feeding the global representation to an action classification module that is trained to determine an action performed by the person to be monitored based on the global representation, and determining the action that was most probably performed by the person to be monitored.

2. The computer-implemented method of claim 1, wherein step b) comprises:

partitioning the plurality of sequence frames (32) into discrete patches;

encoding the discrete patches as tokens, augmented by positioning encoders; and

passing the tokens through the multi-stream encoder to extract intra-modality features.

3. The computer-implemented method of any of the preceding claims, wherein each modality-specified sub-encoder comprises a spatial multi-head self-attention (MHSA) block (42) and a feed-forward network (FFN) residual block (44).

4. The computer-implemented method of any of the preceding claims, wherein the sub-encoders have non-shared parameters.

5. The computer-implemented method of any of the preceding claims, wherein step c) comprises:

fusing the intra-modality features between each other across modality dimensions; and

traversing a zero-initialised query token through decoder layers of the cross-modality fusion decoder to capture inter-modality representation.

6. The computer-implemented method of any of the preceding claims, wherein the cross-modality fusion decoder comprises a focal fusion block (FFB) (58), a global multi-head cross-attention (MHCA) block (60), and a feed-forward network (FFN) residual block (62).

7. The computer-implemented method of claim 6, wherein the focal fusion block comprises a multi-modal consistent attention (MMCAtten) residual block (62), a feed-forward network (FFN) block (64), and a dynamic position embedding (DPE) block (66).

8. The computer-implemented method of claim 7, wherein the MMCAtten residual block computes attention solely along a modality dimension.

9. A control method for a vehicle, comprising carrying out a method according to any of the preceding claims, and:

f) generating a control signal for a vehicle (10) based on the most probable action determined in step e), and controlling the vehicle (10) in accordance with the control signal.

10. A system (16) comprising means for carrying out the method according to any of the preceding claims.

11. A vehicle (10), preferably a ground or a land vehicle, comprising the system (16) according to claim 10, wherein the system (16) is configured for monitoring an operator (14) of the vehicle (10) and/or for controlling the vehicle (10).

12. A computer program comprising instructions to cause the system (16) according to claim 10 or the vehicle (10) according to claim 11 to carry out the method according to any of the claims 1 to 9.

13. A computer readable medium or a data carrier signal comprising the computer program according to claim 12.

FIG. 1

FIG. 2

40

38   42                    44            36

$X_m^{in}$            $X_m^S$            $X_m^E$

## FIG. 3

58

62           64           66

$X_k^E$        $X_k^M$        $X_k^D$        $X_k^F$

## FIG. 4

THE OVERALL RESULTS OF MULTIFUSER IN COMPARISON WITH EXISTING
SINGLE-MODALITY AND MULTI-MODALITY METHODS (ACCURACY IN %).

| Methods | Modality | Balanced Accuracy |
|---|---|---|
| C3D [19] | NIR | 43.41 |
| P3D [20] | NIR | 45.32 |
| I3D [3] | NIR | 63.64 |
| I3D [3] | IR | 65.05 |
| TSM [21] | RGB | 62.72 |
| CTA-NET [22] | NIR | 65.25 |
| TransDARC [8] | NIR | 60.10 |
| UniFormerV2 [7] | RGB | 61.79 |
| ResNet [2] | IR, Depth | 51.08 |
| TSM [21] | IR, Depth | 61.30 |
| UniFormerV2 [7] | RGB, IR, Depth | 61.58 |
| MDBU (I3D) [9] | IR, NIR | 62.02 |
| MultiFuser (Ours) | RGB, IR, Depth | **70.67** |

## FIG. 5A

THE RESULTS OF MULTIFUSER BASED ON DIFFERENT MODALITIES
(ACCURACY IN %).

| Modality | Balanced Accuracy | Top-1 Accuracy |
|---|---|---|
| RGB | 61.79 | 76.71 |
| IR | 59.64 | 72.56 |
| Depth | 56.35 | 69.21 |
| RGB+IR | 69.04 | 80.68 |
| RGB+Depth | 66.43 | 79.90 |
| IR+Depth | 64.42 | 76.65 |
| RGB+IR+Depth | **70.67** | **82.39** |

## FIG. 5B

Europäisches
Patentamt

European
Patent Office

Office européen
des brevets

# EUROPEAN SEARCH REPORT

**Application Number**

EP 25 17 2330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIN DAN ET AL: "Multi-Modality Action Recognition Based on Dual Feature Shift in Vehicle Cabin Monitoring", ICASSP 2024 - 2024 IEEE INTERNATIONAL CONFERENCE ON ACOUSTICS, SPEECH AND SIGNAL PROCESSING (ICASSP), IEEE, 14 April 2024 (2024-04-14), pages 6480-6484, XP034654952, DOI: 10.1109/ICASSP48485.2024.10448437 * abstract, section 2.1, section 2.3; figures 2,3 * | 1-13 | INV. G06V10/82 G06V20/59 |
| A | MA YIMING ET AL: "Robust Multiview Multimodal Driver Monitoring System Using Masked Multi-Head Self-Attention", 2023 IEEE/CVF CONFERENCE ON COMPUTER VISION AND PATTERN RECOGNITION WORKSHOPS (CVPRW), IEEE, 17 June 2023 (2023-06-17), pages 2617-2625, XP034397257, DOI: 10.1109/CVPRW59228.2023.00260 * abstract, section 3.; figures 1-2 * | 1-13 | |
| | | | TECHNICAL FIELDS SEARCHED (IPC) |
| | | | G06V |
| A | ROITBERG ALINA ET AL: "A Comparative Analysis of Decision-Level Fusion for Multimodal Driver Behaviour Understanding", 2022 IEEE INTELLIGENT VEHICLES SYMPOSIUM (IV), IEEE, 4 June 2022 (2022-06-04), pages 1438-1444, XP034152075, DOI: 10.1109/IV51971.2022.9827426 * the whole document * | 1-13 | |

The present search report has been drawn up for all claims

| Place of search | Date of completion of the search | Examiner |
|---|---|---|
| The Hague | 20 August 2025 | Lepetit, Nicolas |

EPO FORM 1503 03.82 (P04C01)